# EUROPEAN PATENT SPECIFICATION

(11) **EP 2 529 248 B1**
(45) Date of publication and mention of the grant of the patent: **14.02.2018**
(21) Application number: 10800854.1
(22) Date of filing: 21.12.2010
(51) Int. Cl.: G01S 19/33, G01S 19/08, G01S 19/07, G01S 19/23

(54) **MULTI-CONSTELLATION GLOBAL NAVIGATION SATELLITE SYSTEM AUGMENTATION AND ASSISTANCE**
ERWEITERUNG UND UNTERSTÜTZUNG FÜR EIN GLOBALES NAVIGATIONSSATELLITENSYSTEM MIT MEHREREN KONSTELLATIONEN
EXTENSION ET ASSISTANCE PAR SYSTÈME GLOBAL DE NAVIGATION PAR SATELLITE MULTI-CONSTELLATION

(30) Priority: 26.01.2010 US 693883
(43) Date of publication of application: 05.12.2012
(73) Proprietor: The Boeing Company, Chicago, IL 60606-1596 (US)
(72) Inventor: LI, Rongsheng, Hacienda Heights California 91745 (US); GHASSEMI, Kamran, Orange California 92869 (US); BENNETT, Jeff R., Santa California 92705 (US); RIZZO, Michael A., Orange California 92869 (US); TEKAWY, Johathan A., Newport Coast California 92657 (US); CERVISI, Richard T., Irvine California 92620 (US)
(74) Representative: Howson, Richard G.B.
(86) International application number: PCT/US2010/061646
(87) International publication number: WO 2011/093964

(56) References cited:
- EP-A1- 1 906 197
- WO-A1-2007/099196
- WO-A2-2005/040849
- ALCANTARILLA, I. ET AL: "The Benefits of Multi-constellation GNSS Augmentations", ION GNSS INTERNATIONAL TECHNICAL MEETING OF THE SATELLITE DIVISION, FORT WORTH, TEXAS, 26 September 2006 (2006-09-26), - 29 September 2006 (2006-09-29), pages 930-938, XP002630622,

## Description

### BACKGROUND

The present disclosure relates to global positioning and navigation, and global positioning or navigation satellite systems, and more particularly to multi-constellation global navigation satellite system augmentation and assistance.

Use of the U.S. Global Positioning System (GPS) has become ubiquitous for determining one's geographic location and navigation. GPS is a constellation of satellites launched and established by the U.S. Government which orbit the earth to provide navigation and positioning signals to GPS receivers or navigation devices of users. Millions of GPS receivers or navigation devices capable of receiving and using GPS signals are in use by the general public and government entities. Despite the wide use of GPS, there remain a few drawbacks. One drawback is low availability or low signal reception in certain locations because of blockage by structures. For example, the so-called "urban canyon" in cities where high rise building may block GPS signals and consequently there may not be a sufficient number of GPS satellites available to perform navigation and timing using the GPS receiver or navigation device. Other countries have also launched and established constellations of satellites for global positioning and navigation or generically Global Navigation Satellite System (GNSS). Examples of these foreign-owned and operated GNSS's may include, but is not necessarily limited to Glonass (Global Navigation Satellite System) operated for the Russian government by the Russian Space Forces, Galileo operated by the European Union, and Compass operated by the Chinese government. These foreign GNSS satellites may significantly multiply by as much as quadrupling the number of navigation satellites useable with GPS satellites to greatly improve availability and performance of global positioning and navigation. However, use of multi-constellation GNSS may present other concerns. For example can positioning and navigation data from other, foreign or secondary GNSS's be relied upon? Are such systems susceptible to spoofing where one system may masquerade as another or the data may otherwise be inaccurate or false? Other concerns may be time to first fix or to establish communication with a sufficient number of satellites in a reasonable time period to determine a location and susceptibility to jamming or other interference.

European patent application EP 1906197 A1 describes a system comprising a multi-constellation data processing facility, a data broadcast segment and a receiver segment, where the sensor segment continuously transmits the received observables to the multi-constellation data processing facility, the multi-constellation data processing facility transfers the determined global augmentation data to the data broadcast segment, and the data broadcast segment delivers to the receiver segment the data produced by the multi-constellation data processing facility.

### SUMMARY

According to a first aspect of the invention, there is provided a system for multi-constellation GNSS augmentation and assistance, the system as defined in claim 1.

According to a second aspect of the invention, there is provided a method for multi-constellation GNSS augmentation and assistance, the method as defined in claim 10.

In accordance with an embodiment, a system for multi-constellation GNSS augmentation and assistance may include a plurality of reference stations. Each reference station may be adapted to receive navigation data from a plurality of different global navigation satellite systems and to monitor integrity and performance data for each different global navigation satellite system. An operation center may receive the integrity and performance data transmitted from each of the plurality of reference stations. The system may also include a communication network for transmitting the message from the operation center to the navcom equipment of a user for augmentation and assistance of the navcom equipment.

In accordance with another embodiment, user navcom equipment for multi-constellation augmentation and assistance may include at least one receiver for receiving navigation information from a first global navigation satellite system of a plurality of different global navigation satellite systems and for receiving navigation information from at least one other global navigation satellite system of the plurality of different global navigation satellite systems. The user navcom equipment may also include a transceiver to receive a message from an operation center. The message may include augmentation and assistance information for use by the navcom equipment to provide global position and navigation information to a user using navigation data from the at least one other global navigation satellite system.

In accordance with another embodiment, a method for multi-constellation GNSS augmentation and assistance may include monitoring integrity and performance data from a global navigation satellite system by a plurality of reference stations. The method may also include transmitting the integrity and performance data from each of the plurality of reference stations to an operation center. The integrity and performance data from each of the reference stations is integrated and analyzed by the operation center. A message is generated based on analysis of the integrated integrity and performance data. The message may include information useable for augmentation and assistance by navcom equipment of a user for providing global position and navigation information to the user using navigation data received by the navcom equipment from the global navigation satellite system.

In accordance with a further embodiment, a method for multi-constellation GNSS augmentation and assistance may include receiving navigation information from a first global navigation satellite system of a plurality of different global satellite navigation systems. The method may also include receiving navigation information from at least one other global navigation satellite system of the plurality of different global navigation satellite systems. The method may further include receiving a message from an operation center. The message may include augmentation and assistance information for use by navcom equipment to provide global position and navigation information to a user using navigation data from the at least one other global navigation satellite system. The augmentation and assistance information received from the operation center may be derived from integrity and performance data collected by the operation center from each of a plurality of reference stations. Each reference station may be adapted to receive navigation data from the plurality of different global navigation satellite systems and to monitor integrity and performance data for each different global navigation satellite system.

Other aspects and features of the present disclosure, as defined solely by the claims, will become apparent to those ordinarily skilled in the art upon review of the following non-limited detailed description of the disclosure in conjunction with the accompanying figures.

### BRIEF DESCRIPTION OF THE DRAWINGS

The present disclosure is further described in the detailed description which follows in reference to the noted plurality of drawings by way of non-limiting examples of embodiments of the present disclosure in which like reference numerals represent similar parts throughout the several views of the drawings.
Figure 1 is a block schematic diagram of an example of a system for multi-constellation GNSS augmentation and assistance in accordance with an embodiment of the present disclosure.
Figure 2 is a flow chart of an example of a method for multi-constellation GNSS augmentation and assistance in accordance with an embodiment of the present disclosure.
Figure 3 is a block schematic diagram of an example of a reference station useable in a system for multi-constellation GNSS augmentation and assistance in accordance with an embodiment of the present disclosure.
Figure 4 is a flow chart of an example of a method for monitoring integrity of a GNSS in accordance with an embodiment of the present disclosure.
Figure 5 is a flow chart of an example of a method for self-survey and self-calibration of a reference station in accordance with an embodiment of the present disclosure.
Figure 6 is a block schematic diagram of an example of an operation center useable in a system for multi-constellation GNSS augmentation and assistance in accordance with an embodiment of the present disclosure.
Figure 7 is a block schematic diagram of an example of user navcom equipment useable with a system for multi-constellation GNSS augmentation and assistance in accordance with an embodiment of the present disclosure.

### DETAILED DESCRIPTION

The following detailed description of embodiments refers to the accompanying drawings, which illustrate specific embodiments of the disclosure. Other embodiments having different structures and operations do not depart from the scope of the present disclosure.

Aspects of the present disclosure are described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer, or a combination of hardware and software components, or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The present disclosure describes an exemplary system, end user navcom device or equipment and methods for providing multi-constellation GNSS augmentation and assistance services. The augmentation and assistance services may include integrity information of "foreign-owned", other, or secondary GNSS systems such as Glonass, Galileo and Compass. The augmentation and assistance services may also provide acquisition and tracking assistance and differential corrections. The tracking assistance may include providing time assistance or information, frequency assistance or data, navigation data assistance, ranging augmentation or similar data or information. The differential corrections may include ionosphere corrections, troposphere corrections, satellite clock corrections, ephemeris corrections or similar data or information. The embodiments described in this disclosure enable the use of a foreign, other or secondary GNSS with a certain level of confidence in the reliability or integrity of the navigation data and greatly enhance the availability, integrity and performance of satellite based navigation capability for both government and commercial/consumer markets.

As used herein Global Positioning System or GPS may refer to the U.S. owned and operated GNSS or constellation of global positioning satellites. Primary GNSS may refer to a GNSS that is primarily used or normally used, such as by navcom equipment of a user. Other GNSS may refer GNSS's owned and/or operated by countries or entities other than the U.S. or to GNSS's other than the GPS GNSS. Secondary GNSS may refer to a GNSS that is not primarily used or normally used, such as by navcom equipment of a user. Global Navigation Satellite system or systems or GNSS or GNSS's may refer to any of the above.

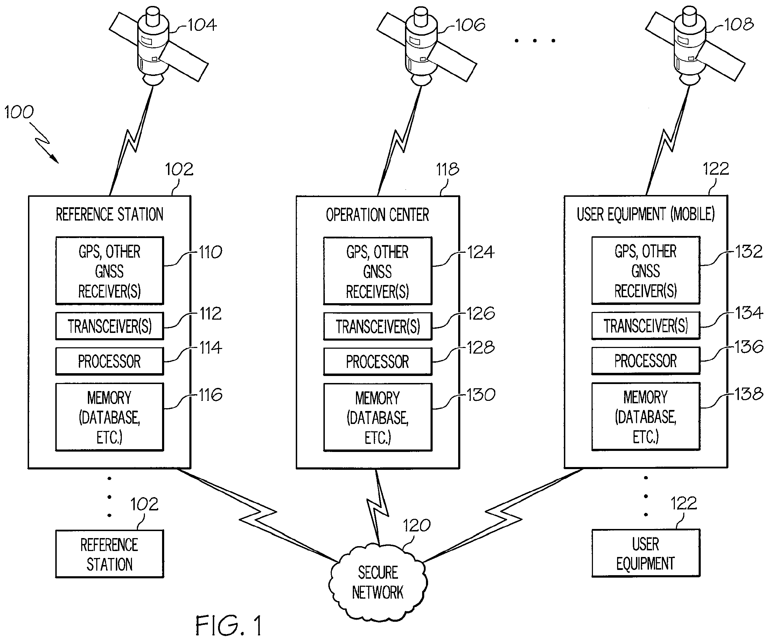

Figure 1 is a block schematic diagram of an example of a system 100 for multi-constellation GNSS augmentation and assistance in accordance with an embodiment of the present disclosure. The system 100 may include a plurality of reference stations 102. Each reference station 102 may be located at a predetermined different geographic location on the earth. This predetermined geographic location is a rough geographic location. As described in more detail herein, each reference station 102 will also have or store precise knowledge or data of the reference stations geographic location. The precise geographic location may be the result of self-survey or self-calibration as described herein.

Each reference station 102 may be adapted to receive navigation data from a plurality of different global navigation satellite systems or GNSS's 104, 106, and 108 or multi-constellations of GNSS satellites. Each reference station 102 may also monitor integrity and performance data for each different GNSS 104, 106 and 108, as well as any other data, information or parameters helpful in providing the augmentation and assistance services described herein. As previously discussed, each GNSS 104, 106 and 108 may be a constellation of satellites owned and operated by different entities or countries which orbit the earth to provide global position and navigation data or information to GNSS receivers, navigation devices, end user combination navigation and communications (navcom) equipment or the like. As used herein, user navcom equipment may refer to any such GNSS receiver, navigation device, end user equipment or similar device capable of receiving navigation and position data or information from a GNSS.

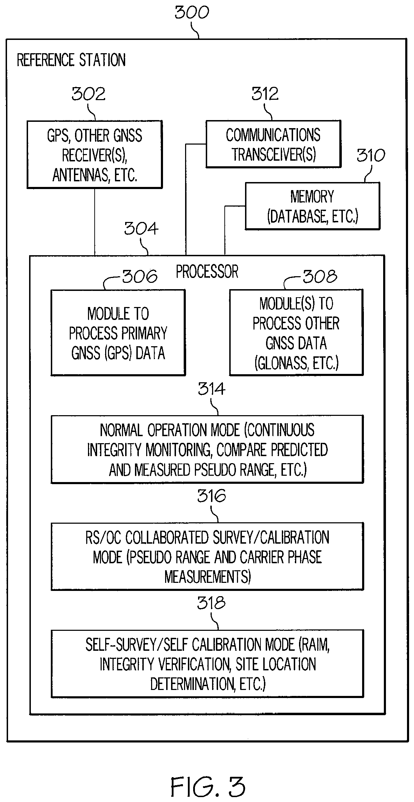

An example of a reference station will be described in more detail with reference to Figure 3. Briefly, the reference station 102 may include a receiver 110 or receivers for receiving GPS and other GNSS signals including navigation and global position data or information. As used herein, navigation data or information may also mean or include global position data or information. The receiver 110 may also receive other information or data for verifying the integrity or reliability of the navigation data and evaluating the performance of the GNSS.

The reference station 102 may also include a communications transceiver 112 for sending and receiving information, such as integrity and performance information. The communications transceiver 112 may send integrity and performance data to an operation center 118 via a network 120. The network 120 may be a secure network using suitable security measures, such as encryption or other techniques, to prevent interference or tampering with the data being sent. The network 120 may be space based using communications satellites (not shown in Figure 1 for purposes of clarity), a cellular communications network, the Internet or private web-based network, or other communications network, or any combination of these.

The reference station 102 may also include a processor 114 for controlling overall operation of the reference station 102. As described in more detail herein, the processor 114 may also be used by the reference station 102 to perform integrity checks or verification and to monitor integrity and performance for each different GNSS 104, 106, and 108.

The reference station 102 may also include a memory 116 for storing databases including data or information related to the integrity and performance for each GNSS 104, 106 and 108 as well as other parameters and information.

As previously discussed, the system 100 may also include an operation center 118 to receive the integrity and performance data transmitted from each of the plurality of reference stations 102 via the network 120. As described in more detail herein, the operation center 118 is adapted to integrate and analyze the integrity and performance data from each of the reference stations 102 and to generate and transmit a message or messages based on the analysis of the integrated integrity and performance data to navcom equipment 122 of a user. The message may include information useable for augmentation and assistance by the navcom equipment 122 for providing global position and navigation information to the user using navigation data received by the navcom equipment 122 from at least one of the global navigation satellite systems 104, 106 and 108, such as from one of the other or secondary GNSS's. The system 100 may include a plurality of operation centers 118. The operation centers 118 may be geographically dispersed similar to the reference stations 102 and may be located at selected geographic locations relative to groups of reference stations 102 for more efficient and reliable operation and communications between different components of the system 100.

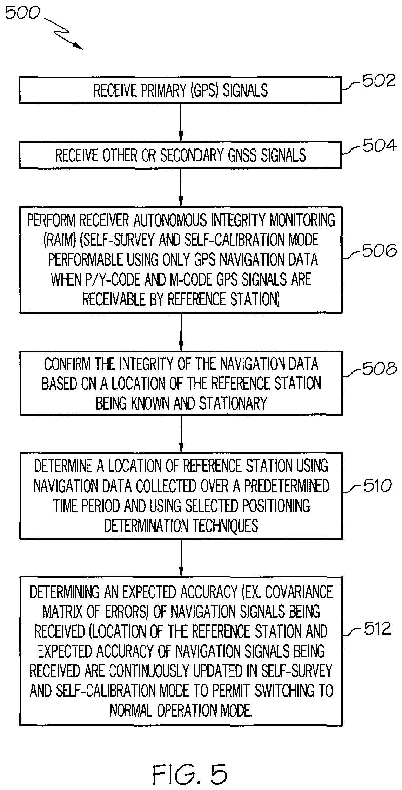

An example of an operation center 118 will be described in more detail with reference to Figure 5. Briefly however, the exemplary operation center 118 as illustrated in Figure 1 may include a receiver 124 or receivers for receiving signals including navigation data and other information from GPS, primary satellites and other or secondary GNSS satellites. The operation center 118 may also include a transceiver 126 for receiving the integrity and performance data from the reference stations 102 via the network 120. The transceiver 126 or another transceiver may transmit the message comprising augmentation and assistance information to the user navcom equipment 122 via the network 120 or via another secure network.

The operation center 118 may also include a processor 128 to control overall operation of the operation center 118. The processor 128 may also integrate and analyze the integrity and performance data and generate the message for the user navcom equipment 122 based on the analysis of the integrated integrity and performance data.

The operation center 118 may further include a memory 130 for storing databases including data associated with the reference stations 102 and data associated with all GPS, primary and other or secondary GNSS satellites, and data related to analysis of the integrity and performance data.

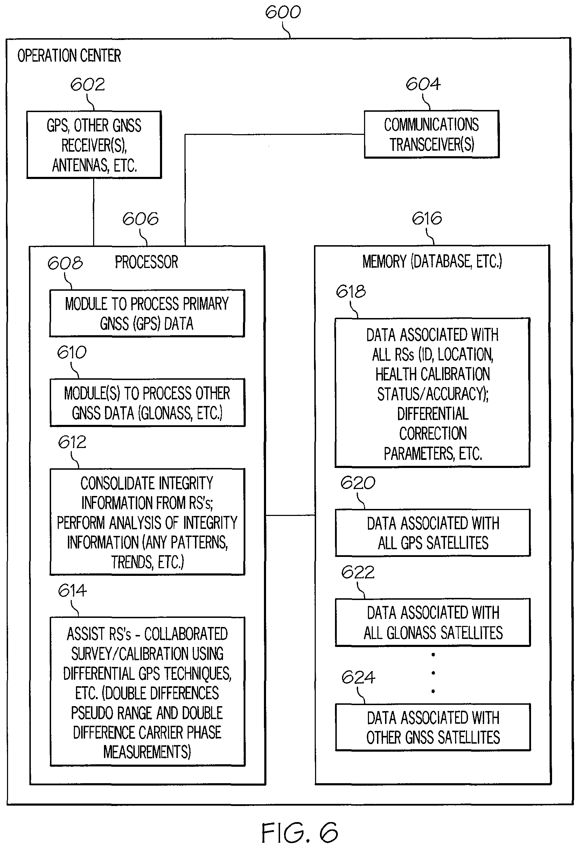

An example of user equipment 122 will be described in more detail with reference to Figure 6. Briefly, the user equipment 122 may include a receiver 132 or receivers to receive navigation data and other information from GPS or primary GNSS satellites and other or secondary GNSS satellites. The user equipment 122 may also include a communication transceiver or transceivers 134 for receiving the messages from the operation center 118 and for other data, voice and/or video communications.

The user equipment 122 may additionally include a processor 136 for overall control and operation of the user equipment 136. The processor 136 may also be adapted to perform multi-level integrity verifications, tests or checks as described herein as well as other operations related to providing the user accurate global position and navigation information.

The user equipment 122 may also include a memory 138 for storing data and databases for proper operation of the user equipment 122 and to provide augmentation and assistance to the user for highly precise global positioning and navigation.

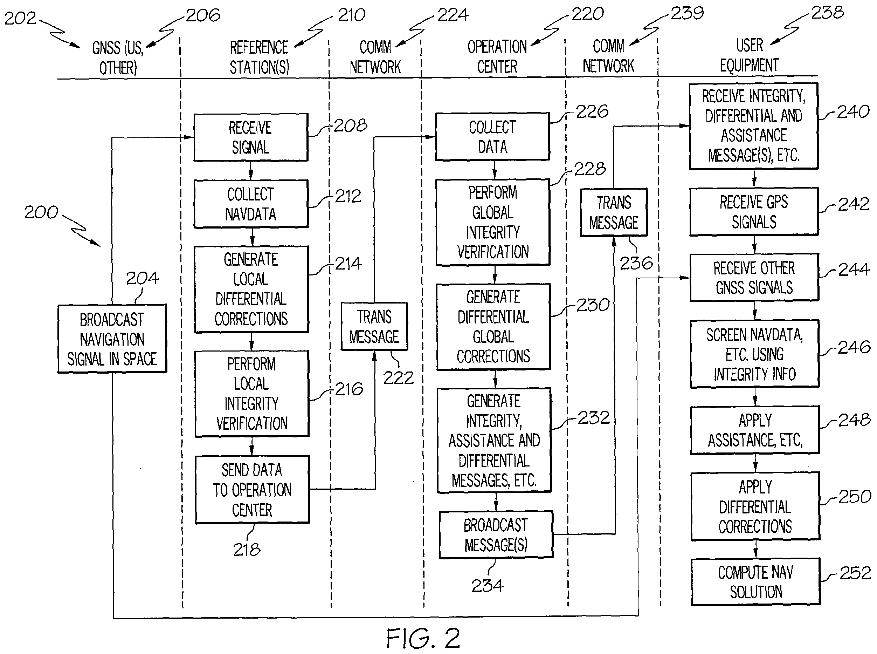

Figure 2 is a flow chart of an example of a method 200 for multi-constellation GNSS augmentation and assistance in accordance with an embodiment of the present disclosure. The method 200 may be embodied in and performed by the system 100 and system components of the system 100 previously described. The operations or functions in Figure 2 may be performed by multiple different components of a system, such as system 100. Accordingly, the flow chart in Figure 2 is divided into columns 202 with each column being labeled by the name of a component that may perform the operations or functions in the particular column.

In block 204, a navigation signal may be broadcast in space by a GNSS satellite 206. The GNSS satellite may a U.S. or GPS or primary satellite or another or secondary GNSS satellite.

In block 208, the navigation signal may be received by a reference station 210. The operations or functions described below as being performed by the reference station 210 will apply for each of the plurality of reference stations in the system. In block 212, the reference station 210 may collect navigation data from multiple GNSS satellites over a predetermined period of time. In block 214, local differential corrections may be determined or generated by the reference station 210. The local differential corrections may be generated using the navigation data collected in block 212 and using the known geographic location of the reference station 210 and the fact the reference station is stationary. The integrity of a GNSS satellite signal, such as from another or secondary GNSS not normally used or operated or owned by another entity, may be considered to be suspicious if the reference stations 210 which are stationary and the location of the reference stations 210 which are known precisely to be a given vector, is violated by exceeding a predefined threshold of tolerance when the information provided by satellite signals is used.

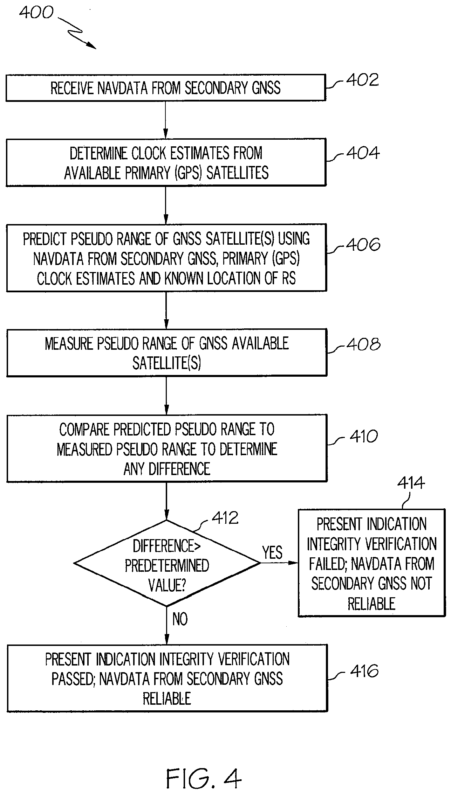

In block 216, the reference station 210 may perform a local integrity verification, test or check to verify the veracity or reliability of the navigation signals or data received from the GNSS 206. An example of a method for performing integrity verification will be described in more detail with reference to Figure 4. In block 218, the integrity and performance data may be sent to the operation center 220. The data or message 222 may be sent via a communications network 224 similar to that previously described. The data or message 222 may be send using suitable security measures, such as encryption to provide a secure network or the network may be secured by other means to prevent tampering or interference with the data or message 222.

In block 226, the operation center 220 may collect the data from each of the plurality of reference stations 210. In block 228, the operation center may combine the collected integrity information and may perform further global integrity verification or check using the integrated data from all of the reference stations 210. An example of global integrity verification or monitoring may be to use a system of equations that model the fact that the reference station locations are known to be given values and the reference station velocities are zero. All the measurements from all sources or reference stations 210 may be used to perform "parity" checks for detecting and isolating anomalous measurements using least square parity space. An advantage of performing global detection of any integrity issues is that the best solution can be arrived at with all the information available.

In block 230, the operation center 220 may generate differential global corrections. Generating the differential global corrections may be similar to that described with respect to block 214 for the reference station 210 and may involve integrating the local differential corrections from the reference stations 210.

In block 232, the operation center 220 may generate a message or messages including augmentation and assistance information for end user navcom equipment based on the global integrity verification in block 228, and the differential global corrections in block 230 and other analysis in the operation center 220. The augmentation and assistance information may include integrity information, assistance information, and differential correction information. The integrity information may include an integrity indicator or indication for each GNSS, notifications or warnings regarding certain GNSS's or other integrity related information or data. The assistance information may include information related to accessing the different GNSS's, preferences for which GNSS's to use, time to first fix, etc. The differential corrections may include information for settings or adjustments to the user navcom equipment for proper use of the navigation data received from a particular GNSS.

In block 234, the message 236 or messages may be broadcast to the user navcom equipment 238 via a communications network 239. The communications network 239 may be the same as communications network 224 or a different communications network. Suitable security measures may be employed to provide a secure network. For example, the message 236 may be encrypted or other security techniques may be exercised.

In block 240, the message 236 or messages may be received by the user equipment 238. In block 242, the user equipment 242 may also receive GPS signals including navigation data or signals from a primary GNSS that is primarily or normally used by the user equipment 238. In block 244, the user equipment 238 may receive GNSS signals from another or secondary GNSS 206. The GNSS signals from the other or secondary GNSS 206 may be used by the user equipment 238 under predetermined conditions. Examples of such predetermined conditions may include to improve performance in an environment where navigation data from one GNSS is impaired and requires use of navigation data from at least one other GNSS, for navigation and position determination in urban canyons, or other situations or environments where augmentation and assistance may be of benefit.

In block 246, the navigation data may be screened using the integrity information received in the message 236 from the operation center 220. In block 248, any assistance information included in the message 236 or messages may be applied to assist the user equipment 238 in providing global location and navigation information to the user.

In block 250, any differential corrections may be applied to the navigation data based on the information contained in the message 236 or messages from the operation center 220. In block 252, a navigation solution or global position may be determined. Computing a navigation solution may involve using measurements such as pseudo range and carrier-phase measurements from several different GNSS systems using known techniques.

Figure 3 is a block schematic diagram of an example of a reference station 300 useable in a system for multi-constellation GNSS augmentation and assistance in accordance with an embodiment of the present disclosure. The reference station 300 may be used for the reference stations 102 in Figure 1. The operations for the reference station 210 in Figure 2 may be embodied in and performed by the reference station 300. The reference station 300 may include one or more receivers 302 to receive navigation data from each of a plurality of different GNSS's. For example, the reference station 300 may include a GPS receiver or primary receiver for receiving navigation and global position data from the U.S. GPS constellation of satellites or a primary GNSS. The reference station 300 may also include one or more other or secondary GNSS receivers for receiving navigation and global position signals from other or secondary GNSS's, such as the Russian Glonass, European Galileo, or Chinese Compass GNSS's.

The reference station 300 may also include a processor 304 for processing the navigation data received by the one or more receivers 302 from the plurality of different GNSS's. The processor 304 may include a module 306 for processing GPS signals or primary GNSS signals and navigation data received from GPS or primary satellites and a module 308 for processing signals and navigation data from other or secondary GNSS satellites.

The processor 304 may be adapted or programmed to monitor the integrity and performance data of each different GNSS and to generate a differential correction for each. The integrity data, performance data, differential correction data as well as other information that may be used for providing augmentation and assistance service as described herein may be stored in a memory 310. The memory 310 may maintain and store databases containing the different data and information useable for augmentation and assistance by end user equipment.

The reference station 300 may also include a communications transceiver 312 to transmit the integrity and performance data, the differential correction data, as well as other information that may be useful for providing the augmentation and assistance services described herein to an operation center, such as operation center 118 in Figure 1 and operation center 220 in Figure 2. The processor 304 may be adapted to encrypt the integrity and performance data, the differential correction data and other information for secure transmission over a communications network, such as network 120 in Figure 1.

The reference station 300 may be further adapted to selectively operate in one of a plurality of modes. For example, the modes may include but are not necessarily limited to a self-survey and self-calibration mode, a reference station/operation center (RS/OC) collaborated survey and calibration mode, and a normal operation mode. The processor 304 may include modules 314-318 operable on the processor 304 for performing each of the different modes of operation that may be selected. For example, a module 314 for the normal operation mode may be operable on the processor 304. A module 316 may be operable on the processor 304 for the RS/OC collaborated survey/calibration mode, and a module 318 for the self-survey/self calibration mode may be operable on the processor 304. The reference station 300 operating in the normal mode is adapted to perform continuous integrity monitoring of each GNSS or continuous monitoring of the particular other or secondary GNSS that is currently being used for augmentation and assistance. An example of a method for monitoring integrity that may be used in the reference station 300 for continuous integrity monitoring will be described in more detail with reference to Figure 4.

The reference station 300 operating in the RS/OC collaborated survey and calibration mode as represented by module 316 may be adapted to provide and transmit pseudo range and carrier-phase measurement data of each secondary GNSS or the GNSS currently being used for augmentation and assistance. As described in more detail with reference to Figure 6, the operation center may use pseudo range and carrier-phase measurement data from another reference station which was previously surveyed and the pseudo range and carrier-phase measurement data from the current reference station operating in the RS/OC collaborated survey and calibration mode to determine a precise location of the current reference station operating in this mode.

The reference station 300 operating in the self-survey and self-calibration mode as represented by module 318 may perform a receiver autonomous integrity monitoring (RAIM) operation or algorithm. In the self-survey and self-calibration mode, the reference station 300 may also perform verification of the integrity of the navigation data and any other information from the other or secondary GNSS, and may determine a site location of the reference station 300. An example of a method for self-survey and self-calibration will be described in more detail with reference to Figure 5.

Figure 4 is a flow chart of an example of a method 400 for monitoring integrity of a GNSS in accordance with an embodiment of the present disclosure. The method 400 may be embodied in and/or performed by the module 314 for the normal operation mode of the reference station 300 in Figure 3. In block 402, navigation data may be received from another or secondary GNSS. In block 404, clock estimates (or GPS clock estimates if from a GPS satellite) may be determined from GPS signals from GPS satellites or signals from primary satellites which are available or from which the reference station can receive GPS or primary signals.

In block 406, a pseudo range of the GNSS satellite or satellites within range of the reference station or currently being used for augmentation and assistance may be predicted using the navigation data received from the secondary GNSS, the clock estimates (or GPS clock estimates if from GPS satellites), and the known precise location of the reference station.

In block 408, a pseudo range of the GNSS available satellite or satellites or the GNSS satellites currently in view of the reference station and being used for providing augmentation and assistance services may be measured.

In block 410, the predicted pseudo range may be compared to the measured pseudo range to determine if there is any difference between the predicted and measured the pseudo ranges. In block 412, a determination may be made whether the difference between the predicted and measured pseudo ranges exceeds a predetermined threshold value. If the difference exceeds the predetermined threshold value, the method 400 may advance to block 414. In block 414, an indication may be generated and/or presented indicating that the integrity verification, test or check failed signaling an integrity verification failure. The navigation data from the other or secondary GNSS may not be reliable for use in providing augmentation and assistance services.

If the difference between the predicted and measured pseudo ranges does not exceed the predetermined value in block 412, the method 400 may advance to block 416. In block 416, an indication may be generated and/or presented indicating that the integrity verification, test or check passed and the navigation data from the other or secondary GNSS is reliable for use in providing augmentation and assistance services.

Figure 5 is a flow chart of an example of a method 500 for self-survey and self-calibration of a reference station in accordance with an embodiment of the present disclosure. The method 500 may be embodied in and/or performed by the module 318 and Figure 3. In block 502, GPS or primary signals may be received from GPS or primary satellites within view or available to the reference station. In block 504, secondary GNSS signals may be received from other or secondary GNSS satellites within view or available to the reference station.

In block 506, a receiver autonomous integrity monitoring (RAIM) process or algorithm may be performed using the GPS and GNSS received signals or the primary GNSS and secondary GNSS received signals. The self-survey and self-calibration mode may be performable using only GPS navigation data or primary navigation data when P/Y-code and/or M-code GPS signals are receivable by the reference station.

RAIM detects faults with redundant GPS or GNSS pseudo range measurements. That is, when more satellites are available than needed to produce a position fix, the extra pseudo ranges should all be consistent with the computed position. A pseudo range that differs significantly from the expected value (i.e., an outlier) may indicate a fault of the associated satellite or another signal integrity problem (e.g., ionospheric dispersion, etc.). Traditional RAIM uses fault detection (FD) only, however newer GPS receivers incorporate fault detection and exclusion (FDE) which enables them to continue to operate in the presence of a GPS failure. The test statistic used is a function of the pseudo range measurement residual (the difference between the expected measurement and the observed measurement) and the amount of redundancy. The test statistic is compared with a threshold value, which is determined based on the requirements for the probability of a false alarm (Pfa) and the probability of missed detection (Pmd).

In block 508, the integrity of the navigation data may be confirmed based on a geographic location of the reference station being known and the fact that the reference station is not moving or stationary.

In block 510, a geographic location of the reference station may be determined using the GPS navigation data or primary navigation data collected over a predetermined time period and using a GPS-based positioning technique. GPS-based positioning techniques are known, for example a simple least square approach can be used that determines the reference station location, the receiver clock bias, and clock rate error by measurements received over a period of time.

In block 512, and expected accuracy of the navigation signals being received may be determined. For example, the expected accuracy may be determined using a covariance matrix of errors associated with the received navigation signals. The covariance matrix characterizes the "variance" and "correlation" of the errors. The diagonal element of the matrix is the variances of each of the errors in the vector. The larger the variances, the more likely the error may vary which consequently means larger errors. As more measurements are received over time, knowledge of the errors becomes better and consequently the variances will become smaller. The expected accuracy of the navigation signals being received and the location of the reference station may be continuously updated in the self-survey and self-calibration mode to permit switching to the normal operation mode when the variance of the errors becomes sufficiently small.

Figure 6 is a block schematic diagram of an example of an operation center 600 useable in a system for multi-constellation GNSS augmentation and assistance in accordance with an embodiment of the present disclosure. The operation center 600 may be used for the operation center 118 in Figure 1 and the operations or functions of the operation center 220 in Figure 2 may be embodied in or performed by the operation center 600. The operation center 600 may include a receiver 602 or receivers for receiving GNSS signals which may include GPS signals or signals from a primary GNSS and signals from other or secondary GNSS's. The operation center 600 may also include a communications transceiver 604 or transceivers for sending and receiving signals and/or messages from the reference stations and user navcom equipment as described herein.

The operation center 600 may also include a processor 606. The processor 606 may control the overall function and operation of the operation center 600. The processor 606 may include a module 608 to process GPS signals and data or signals and data from a primary GNSS. The processor 606 may also include a module 610 or modules to process other or secondary GNSS signals and data.

The processor 606 may also include a module 612 or means to consolidate integrity information from the plurality of reference stations. Analysis may be performed by the operation center on the integrity information to determine any patterns, trends or other statistical information that may be helpful in providing augmentation and assistance services.

The processor 606 may also include a module 614 to assist the reference stations in the RS/OC collaborated survey and calibration of each reference station. In conjunction with this, the operation center 600 may receive navigation data from a newly deployed reference station. The operation center 600 may combine the navigation data from the newly deployed reference station with measured navigation data from a previously surveyed and calibrated reference station using a differential GPS technique or similar technique. An example of a differential GPS technique may include using a double differenced pseudo range measurement and a double differenced carrier-phase measurement for calibrating the newly deployed reference station.

The operation center 600 may further include a memory 616. The memory 616 may store one or more databases. One database 618 may store data including but not necessarily limited to an identification of each reference station, determine a location of each reference station, calibration status and accuracy of each reference station, a differential correction parameter for each reference station. Another database 620 may store data or information associated with the GPS or primary constellation of satellites. Additional databases 622-624 may store data associated with other or secondary GNSS satellite constellations.

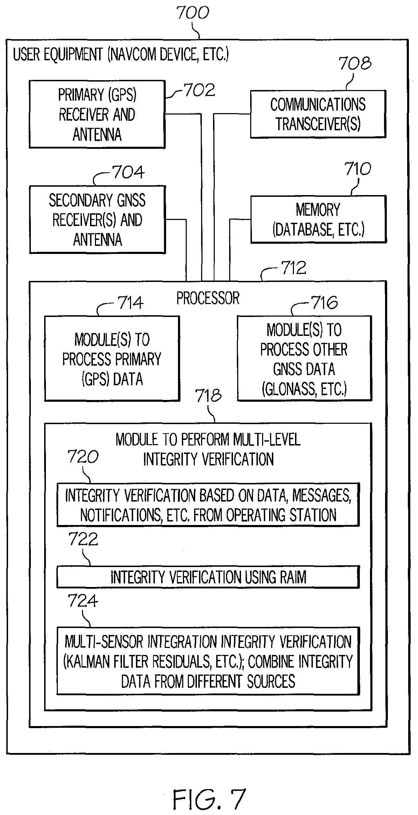

Figure 7 is a block schematic diagram of an example of user navcom equipment 700 or a user navcom device useable with a system for multi-constellation GNSS augmentation and assistance in accordance with an embodiment of the present disclosure. The user navcom equipment 700 may be mobile and may be a combination of GPS receiver or primary GNSS receiver, secondary GNSS receiver and communication device for communication with an operation center as described herein, and data, voice and video communications with other communications devices or equipment. The user navcom equipment 700 may be used for the mobile user equipment 122 for use with the system 100 in Figure 1. The functions and operations described with respect to the user equipment 238 in Figure 2 may be embodied in or performed by the user navcom equipment 700.

The navcom equipment 700 is adapted to use navigation data from a plurality of different GNSS's to improve performance in an environment where navigation data from one GNSS may be impaired or for some other reason use of navigation data from at least one other global navigation system may be required or beneficial. Similar to that previously described, the navcom equipment 700 is also adapted to receive a message or messages from an operation center. Information in the message from the operation center is useable by the navcom device 700 to verify the integrity and performance of the at least one other GNSS.

The user navcom equipment 700 may include a receiver and antenna 702 for receiving navigation information and other data from a first global navigation satellite system of a plurality of different global navigation satellite systems. The first global navigation satellite system may be the GPS satellite system or a primary GNSS.

The user navcom equipment 700 may also include one or more additional receivers 704 for receiving navigation information and other data from at least one other GNSS or secondary GNSS of a plurality of different GNSS's. For example, the user navcom equipment 700 may include receivers and associated antennas for receiving signals and data from the Russian Glonass constellation of navigation satellites, the European Galileo GNSS, the Chinese Compass GNSS, and any other GNSS's. In another embodiment, the user navcom equipment 700 may include a single receiver and associated antenna adapted to receive signals and data from the plurality of different GNSS's.

The user navcom equipment 700 may also include a communications transceiver 708 to receive a message or messages from an operation center similar to that previously described. The message may include augmentation and assistance information for use by the user navcom equipment 700 to provide global position and navigation information to the user using navigation data from at least one other GNSS or secondary GNSS. The transceiver 708 may also be used for other data, voice or video communications or the user navcom equipment may include one or more other transceivers of such communications.

As previously described, the augmentation and assistance information received by the user navcom equipment 700 from the operation center may be derived from integrity and performance data collected by the operation center from each of the plurality of reference stations. Each reference station may be adapted to receive navigation data from the plurality of different GNSS's and to monitor integrity and performance data for each different GNSS or secondary GNSS.

The user navcom equipment 700 may also include a memory 710 for storing databases containing data related to the integrity and performance and other information for use in augmentation and assistance, including but not limited to acquisition and tracking assistance of navigation satellites, differential corrections for the different GNSS's and associated satellites and other data.

The user navcom equipment 700 may also include a processor 712. The processor 712 may control overall operation of the user navcom equipment 700. For example, the processor 712 may include a module 714 operable on the processor 712 to process GPS signals and data or signals and data from a primary GNSS, and a module 716 operable on the processor 712 to process other or secondary GNSS signals and data.

The user navcom equipment 700 may also include a module 718 operable on the processor 712 for performing a multi-level integrity verification, test, or check with regard to the navigation data from each of the GNSS's or the GNSS currently being used for augmentation and assistance. The multi-level integrity verification may include a first level integrity verification 720 that may involve determining a first integrity indication from the message or messages from the operation center related to integrity and performance of the GNSS's. A second level integrity verification 722 may include determining a second integrity indication using a RAIM process or algorithm. A third level integrity verification 724 may include determining a third integrity indication using multi-sensor integration. An example of using multi-sensor integration may include using Kalman Filter Residuals or similar techniques. Kalman Filtering is a technique that may be used to combine (or fuse) measurements from multiple sources (such as multiple sensors). In a Kalman Filter, the measurements or information from the multiple sources is used to predict what the new measurements will be. The actual new measurements are then compared to the predicted measurements. The difference between measured and predicted measurements is known as the "Kalman Filter Residual" (also known as the "innovation"). In addition, based on "covariance information", there is an expectation of how much variation the "residual" can have. If the actually residual value is significantly beyond the expected range of the variation, then the measurements are suspected to have been corrupted, and this may lead to a detection or integrity problem.

## Claims

1. A system for multi-constellation GNSS augmentation and assistance, comprising:
a plurality of reference stations, each reference station being adapted to receive navigation data from a plurality of different global navigation satellite systems and to monitor integrity and performance data for each different global navigation satellite system; and
an operation center arranged to
receive the integrity and performance data transmitted from each of the plurality of reference stations;
integrate and analyze the integrity and performance data; and
generate and send a message based on an analysis of the integrated integrity and performance data to a navcom equipment of a user for augmentation and assistance of the navcom equipment;
wherein the system further comprises a communication network for transmitting the message from the operation center to the navcom equipment of a user.

2. The system of claim 1, wherein the message comprises information useable for augmentation and assistance by the navcom equipment for providing global position and navigation information to the user using navigation data received by the navcom equipment from at least one of the global navigation satellite systems.

3. The system of claim 2, wherein the navcom equipment is adapted to use navigation data from the plurality of different global navigation satellite systems to improve performance in an environment where navigation data from one global navigation satellite system is impaired and requires use of navigation data from at least one other global navigation system, and wherein the information in the message from the operation center is useable to verify the integrity and performance of the at least one other global navigation system.

4. The system of claim 3, wherein the reference station comprises:
one or more receivers to receive the navigation data from each of the plurality of different global navigation satellite systems;
a processor, or a combination of hardware and software components, for processing the navigation data from the plurality of different global navigation satellite systems, to monitor the integrity and performance data of each different global navigation satellite system and to generate a differential correction; and
a communications transceiver to transmit the integrity and performance data and the differential correction to the operation center.

5. The system of claim 4, wherein the reference station is adapted to selectively operate in one of a plurality of modes comprising a self-survey and self-calibration mode, a reference station/operation center (RS/OC) collaborated survey and calibration mode, and a normal operation mode.

6. The system of claim 5, wherein the reference station operating in the self-survey and self-calibration mode is adapted to:
perform receiver autonomous integrity monitoring;
confirm the integrity of the navigation data based on a location of the reference station being known and stationary;
determine a location of the reference station using navigation data collected over a predetermined time period; and
determining an expected accuracy of a plurality of navigation signals being received, wherein the location of the reference station and the expected accuracy of the navigation signals being received are continuously updated in the self-survey and self-calibration mode to permit switching to the normal operation mode.

7. The system of claim 5, wherein the reference station operating in the reference station/operation center (RS/OC) collaborated survey and calibration mode is adapted to provide a pseudo range and carrier-phase measurement data of the global navigation satellite systems to the operation center, the operation center using pseudo range and carrier-phase measurement data from another reference station which was previously surveyed and the pseudo range and carrier-phase measurement data from the reference station operating in the reference station/operation center (RS/OC) collaborated survey and calibration mode to determine a location of the reference station.

8. The system of claim 5, wherein the reference station operating in the normal mode is adapted to perform continuous integrity monitoring of the global navigation satellite system being used, wherein continuously monitoring the integrity comprises:
predicting a pseudo range of the global navigation satellite system currently being used, wherein the pseudo range is predicted using navigation data from the global navigation satellite system currently being used, a known position of the reference station, and clock estimates from another global navigation satellite system;
comparing the predicted pseudo range to a measured pseudo range of the global navigation satellite system currently being used to determine any difference; and
determining there is an integrity problem in response to the difference exceeding a predetermined threshold value.

9. The system of claim 1, wherein the operation center comprises:
a module to assist reference stations in a reference station/operation center (RS/OC) collaborated survey and calibration of each reference station, wherein the operation center:
receives navigation data from a newly deployed reference station;
combines the navigation data from the newly deployed reference station with measured navigation data from a previously surveyed and calibrated reference station using a differential technique, wherein the differential technique comprises using a double differenced pseudo range measurement and a double differenced carrier-phase measurement; and
wherein the operation center further comprises a database including an identification of each reference station, a location of each reference station, calibration status and accuracy of each reference station, a differential correction parameter for each reference station, and information related to each global navigation satellite system.

10. A method for multi-constellation GNSS augmentation and assistance, comprising:
monitoring integrity and performance data from a global navigation satellite system by a plurality of reference stations;
transmitting the integrity and performance data from each of the plurality of reference stations to an operation center;
integrating and analyzing the integrity and performance data from each of the reference stations by the operation center;
generating a message based on analysis of the integrated integrity and performance data, the message comprising information useable for augmentation and assistance by a navcom equipment of a user for providing global position and navigation information to the user using navigation data received by the navcom equipment from the global navigation satellite system; and
sending the message to the navcom equipment of the user.

11. The method of claim 10, further comprising using navigation data from another global navigation satellite system by the navcom equipment of the user, the other global navigation satellite system being used by the navcom equipment under predetermined conditions.

12. The method of claim 10, further comprising:
generating a local differential correction by each reference station using the navigation data received by the reference station and a known geographic location of the reference station; and
determining integrity of the navigation data received from the global navigation satellite system by each reference station.

13. The method of claim 12, wherein determining the integrity of the navigation data by each reference station comprises:
receiving the navigation data from the global navigation satellite system;
determining clock estimates from another global navigation satellite system;
predicting a pseudo range of the global navigation satellite system using the navigation data received from the global navigation satellite system and the clock estimates and a known location of the reference station;
measuring a pseudo range of the global navigation satellite system;
comparing the predicted pseudo range to the measured pseudo range of the global navigation satellite system to determine any difference;
presenting a indication of an integrity verification failure in response to the difference being greater than a predetermined threshold value; and
presenting an indication of integrity verification passed in response to the difference not exceeding the predetermined threshold value.

14. The method of claim 10, further comprising:
surveying and calibrating each of the reference stations, wherein surveying and calibrating each of the reference stations comprises:
transmitting pseudo range and carrier-phase measurements for the global navigation satellite system to the operation center by a reference station being newly deployed;
measuring pseudo range and carrier-phase measurements from a previously surveyed and calibrated reference station proximate to the reference station being newly deployed to determine a geographic location of the reference station being newly deployed; and
combining measurements from the reference station being newly deployed with the measurements from the previously surveyed and calibrated reference station to determine a precise location of the reference station being newly deployed and to survey and calibrate the reference station being newly deployed.

15. The method of claim 14, further comprising using a differential technique to combine the measurements of the reference station being newly deployed and the measurements of the previously surveyed and calibrated reference station, wherein using the differential technique comprises using a double differenced pseudo range measurement and a double differenced carrier-phase measurement.

## Patentansprüche

1. System zur Mehrkonstellations-GNSS-Steigerung und -Assistenz, das aufweist:
eine Vielzahl von Referenzstationen, wobei jede Referenzstation dazu ausgelegt ist, Navigationsdaten von einer Vielzahl verschiedener globaler Navigationssatellitensysteme zu empfangen und Integritäts- und Leistungsdaten für jedes verschiedene globale Navigationssatellitensystem zu überwachen; und
ein Betriebszentrum, das ausgelegt ist zum
Empfangen der Integritäts- und Leistungsdaten, die von jeder der Vielzahl von Referenzstationen gesendet werden;
Integrieren und Analysieren der Integritäts- und Leistungsdaten; und
Erzeugen und Senden einer Nachricht basierend auf einer Analyse der integrierten Integritäts- und Leistungsdaten an ein Navigations- und Kommunikations-Gerät eines Benutzers zur Steigerung und Assistenz des Navigations- und Kommunikations-Geräts;
wobei das System des Weiteren ein Kommunikationsnetzwerk zum Senden der Nachricht von dem Betriebszentrum an das Navigations- und Kommunikations-Gerät eines Benutzers aufweist.

2. System nach Anspruch 1, wobei die Nachricht Informationen enthält, die zur Steigerung und Assistenz durch das Navigations- und Kommunikations-Gerät verwendbar sind, um dem Benutzer globale Positions- und Navigationsinformationen unter Verwendung von Navigationsdaten zu liefern, die von dem Navigations- und Kommunikations-Gerät von wenigstens einem der globalen Navigationssatellitensysteme empfangen werden.

3. System nach Anspruch 2, wobei das Navigations- und Kommunikations-Gerät dazu ausgelegt ist, Navigationsdaten von der Vielzahl verschiedener globaler Navigationssatellitensysteme zu verwenden, um die Leistung in einer Umgebung zu verbessern, in der Navigationsdaten von einem globalen Navigationssatellitensystem beeinträchtigt werden, und in der die Verwendung von Navigationsdaten von wenigstens einem anderen globalen Navigationssystem erforderlich ist, und wobei die Informationen in der Nachricht von dem Betriebszentrum verwendbar sind, um die Integrität und Leistung des wenigstens einen anderen globalen Navigationssystems zu verifizieren.

4. System nach Anspruch 3, wobei die Referenzstation aufweist:
einen oder mehrere Empfänger, um die Navigationsdaten von jedem der Vielzahl verschiedener globaler Navigationssatellitensysteme zu empfangen;
einen Prozessor, oder eine Kombination aus Hardware- und Softwarekomponenten, zum Verarbeiten der Navigationsdaten von der Vielzahl verschiedener globaler Navigationssatellitensysteme, um die Integritäts- und Leistungsdaten jedes verschiedenen globalen Navigationssatellitensystems zu überwachen und eine Differentialkorrektur zu erzeugen; und
einen Kommunikations-Transceiver, um die Integritäts- und Leistungsdaten und die Differentialkorrektur an das Betriebszentrum zu senden.

5. System nach Anspruch 4, wobei die Referenzstation dazu ausgelegt ist, selektiv in einem einer Vielzahl von Modi zu arbeiten, die einen Selbstüberprüfungs- und Selbstkalibrierungsmodus, einen gemeinsamen Referenzstations-/Betriebszentrums-Überprüfungs- und -Kalibrierungsmodus, und einen normalen Betriebsmodus aufweisen.

6. System nach Anspruch 5, wobei die Referenzstation, die im Selbstüberprüfungs- und Selbstkalibrierungsmodus arbeitet, ausgelegt ist zum:
Durchführen von empfängerautonomer Integritätsüberwachung;
Bestätigen der Integrität der Navigationsdaten basierend auf einem Standort der Referenzstation, der bekannt und stationär ist;
Ermitteln eines Standorts der Referenzstation mittels Navigationsdaten, die über einen vorgegebenen Zeitraum gesammelt werden; und
Ermitteln einer erwarteten Genauigkeit einer Vielzahl von Navigationssignalen, die empfangen werden, wobei der Standort der Referenzstation und die erwartete Genauigkeit der Navigationssignale, die empfangen werden, im Selbstüberprüfungs- und Selbstkalibrierungsmodus kontinuierlich aktualisiert werden, um ein Schalten in den normalen Betriebsmodus zu erlauben.

7. System nach Anspruch 5, wobei die Referenzstation, die im gemeinsamen Referenzstations-/Betriebszentrums-Überprüfungs- und -Kalibrierungsmodus arbeitet, dazu ausgelegt ist, Pseudobereichs- und Trägerphasenmessdaten der globalen Navigationssatellitensysteme an das Betriebszentrum zu liefern, wobei das Betriebszentrum Pseudobereichs- und Trägerphasenmessdaten von einer anderen Referenzstation verwendet, die vorher überprüft worden ist, und die Pseudobereichs- und Trägerphasenmessdaten von der Referenzstation, die im gemeinsamen Referenzstations-/Betriebszentrums-Überprüfungs- und -Kalibrierungsmodus arbeitet, um einen Standort der Referenzstation zu ermitteln.

8. System nach Anspruch 5, wobei die Referenzstation, die im normalen Modus arbeitet, dazu ausgelegt ist, kontinuierliche Integritätsüberwachung des globalen Navigationssatellitensystems, das verwendet wird, durchzuführen, wobei das kontinuierliche Überwachen der Integrität beinhaltet:
Vorhersagen eines Pseudobereichs des globalen Navigationssatellitensystems, das aktuell verwendet wird, wobei der Pseudobereich vorhergesagt wird unter Verwendung von Navigationsdaten von dem globalen Navigationssatellitensystem, das aktuell verwendet wird, von einer bekannten Position der Referenzstation, und von Taktschätzungen von einem anderen globalen Navigationssatellitensystem;
Vergleichen des vorhergesagten Pseudobereichs mit einem gemessenen Pseudobereich des globalen Navigationssatellitensystems, das aktuell verwendet wird, um eine etwaige Differenz zu ermitteln; und
Feststellen, dass es ein Integritätsproblem gibt, im Ansprechen darauf, dass die Differenz einen vorgegebenen Schwellenwert übersteigt.

9. System nach Anspruch 1, wobei das Betriebszentrum aufweist:
ein Modul, um Referenzstationen bei einer gemeinsamen Referenzstations-/Betriebszentrums-Überprüfung und -Kalibrierung jeder Referenzstation zu assistieren, wobei das Betriebszentrum:
Navigationsdaten von einer neu eingesetzten Referenzstation empfängt;
die Navigationsdaten von der neu eingesetzten Referenzstation mit gemessenen Navigationsdaten von einer vorher überprüften und kalibrierten Referenzstation mittels einer Differentialtechnik kombiniert, wobei die Differentialtechnik das Verwenden einer doppelt differenzierten Pseudobereichsmessung und einer doppelt differenzierten Trägerphasenmessung beinhaltet; und
wobei das Betriebszentrum des Weiteren eine Datenbank aufweist, die eine Kennung jeder Referenzstation, einen Standort jeder Referenzstation, Kalibrierungsstatus und Genauigkeit jeder Referenzstation, einen Differentialkorrekturparameter für jede Referenzstation und Informationen, die sich auf jedes globale Navigationssatellitensystem beziehen, enthält.

10. Verfahren zur Mehrkonstellations-GNSS-Steigerung und -Assistenz, das beinhaltet:
Überwachen von Integritäts- und Leistungsdaten von einem globalen Navigationssatellitensystem durch eine Vielzahl von Referenzstationen;
Senden der Integritäts- und Leistungsdaten von jeder der Vielzahl von Referenzstationen an ein Betriebszentrum;
Integrieren und Analysieren der Integritäts- und Leistungsdaten von jeder der Referenzstationen durch das Betriebszentrum; und
Erzeugen einer Nachricht basierend auf einer Analyse der integrierten Integritäts- und Leistungsdaten, wobei die Nachricht Informationen enthält, die zur Steigerung und Assistenz durch ein Navigations- und Kommunikations-Gerät eines Benutzers verwendbar sind, um globale Positions- und Navigationsinformationen an den Nutzer mittels Navigationsdaten zu liefern, die von dem Navigations- und Kommunikations-Gerät von dem globalen Navigationssatellitensystem empfangen werden; und
Senden der Nachricht an das Navigations- und Kommunikations-Gerät des Nutzers.

11. Verfahren nach Anspruch 10, das des Weiteren das Verwenden von Navigationsdaten von einem anderen globalen Navigationssatellitensystem durch das Navigations- und Kommunikations-Gerät des Nutzers beinhaltet, wobei das andere globale Navigationssatellitensystem unter vorgegebenen Bedingungen von dem Navigations- und Kommunikations-Gerät verwendet wird.

12. Verfahren nach Anspruch 10, das des Weiteren beinhaltet:
Erzeugen einer lokalen Differentialkorrektur durch jede Referenzstation unter Verwendung der von der Referenzstation empfangenen Navigationsdaten und eines bekannten geografischen Standorts der Referenzstation; und
Ermitteln der Integrität der von dem globalen Navigationssatellitensystem empfangenen Navigationsdaten durch jede Referenzstation.

13. Verfahren nach Anspruch 12, wobei das Ermitteln der Integrität der Navigationsdaten durch jede Referenzstation beinhaltet:
Empfangen der Navigationsdaten von dem globalen Navigationssatellitensystem;
Ermitteln von Taktschätzungen von einem anderen globalen Navigationssatellitensystem;
Vorhersagen eines Pseudobereichs des globalen Navigationssatellitensystems unter Verwendung der von dem globalen Navigationssatellitensystem empfangenen Navigationsdaten und der Taktschätzungen und eines bekannten Standorts der Referenzstation;
Messen eines Pseudobereichs des globalen Navigationssatellitensystems;
Vergleichen des vorhergesagten Pseudobereichs mit dem gemessenen Pseudobereich des globalen Navigationssatellitensystems, um eine etwaige Differenz zu ermitteln;
Präsentieren einer Anzeige eines Integritätsverifizierungsfehlers im Ansprechen darauf, dass die Differenz größer als ein vorgegebener Schwellenwert ist; und
Präsentieren einer Anzeige einer erfolgreichen Integritätsverifizierung im Ansprechen darauf, dass die Differenz den vorgegebenen Schwellenwert nicht übersteigt.

14. Verfahren nach Anspruch 10, das des Weiteren beinhaltet:
Überprüfen und Kalibrieren jeder der Referenzstationen, wobei das Überprüfen und Kalibrieren jeder der Referenzstationen beinhaltet:
Senden von Pseudobereichs- und Trägerphasenmessungen für das globale Navigationssatellitensystem an das Betriebszentrum durch eine Referenzstation die neu eingesetzt wird;
Messen der Pseudobereichs- und Trägerphasenmessungen von einer früher überprüften und kalibrierten Referenzstation nahe der Referenzstation, die neu eingesetzt wird, um einen geografischen Standort der Referenzstation, die neu eingesetzt wird, zu ermitteln; und
Kombinieren der Messungen von der Referenzstation, die neu eingesetzt wird, mit den Messungen von der früher überprüften und kalibrierten Referenzstation, um einen genauen Standort der Referenzstation, die neu eingesetzt wird, zu ermitteln, und um die Referenzstation, die neu eingesetzt wird, zu überprüfen und zu kalibrieren.

15. Verfahren nach Anspruch 14, das des Weiteren das Verwenden einer Differentialtechnik beinhaltet, um die Messungen der Referenzstation, die neu eingesetzt wird, und die Messungen der früher überprüften und kalibrierten Referenzstation zu kombinieren, wobei das Verwenden der Differentialtechnik das Verwenden einer doppelt differenzierten Pseudobereichsmessung und einer doppelt differenzierten Trägerphasenmessung beinhaltet.

## Revendications

1. Système d'augmentation et d'assistance pour GNSS multi-constellation, comprenant :
plusieurs stations de référence, chaque station de référence étant adaptée pour recevoir des données de navigation de plusieurs systèmes satellites de navigation globale et pour contrôler des données d'intégrité et de performances pour chaque système satellite de navigation globale ; et
un centre opérationnel conçu pour :
recevoir les données d'intégrité et de performances transmises depuis chacune des plusieurs stations de référence ;
intégrer et analyser les données d'intégrité et de performances ; et
générer et envoyer un message en fonction d'une analyse des données d'intégrité et de performances à un équipement navcom d'un utilisateur pour augmentation et assistance de l'équipement navcom ;
où le système comprend en outre un réseau de communication destiné à transmettre le message depuis le centre opérationnel vers l'équipement navcom d'un utilisateur.

2. Système selon la revendication 1, dans lequel le message comprend des informations utilisables pour augmentation et assistance par l'équipement navcom afin de fournir des informations de position globale et de navigation à l'utilisateur en utilisant des informations de navigation reçues par l'équipement navcom depuis au moins un des systèmes satellites de navigation globale.

3. Système selon la revendication 2, dans lequel l'équipement navcom est adapté pour utiliser des données de navigation depuis plusieurs systèmes satellites de navigation globale afin d'améliorer les performances dans un environnement où les données de navigation en provenance d'un système satellite de navigation globale sont affaiblies et nécessitent l'utilisation de données de navigation en provenance d'au moins un autre système de navigation globale, et où les informations dans le message en provenance du centre opérationnel sont utilisables pour vérifier l'intégrité et les performances d'au moins un autre système de navigation globale.

4. Système selon la revendication 3, dans lequel la station de référence comprend :
au moins un récepteur pour recevoir les données de navigation de chacun des plusieurs systèmes satellites de navigation globale ;
un processeur ou une combinaison de composants matériels et logiciels pour traiter les données de navigation en provenance des plusieurs systèmes satellites de navigation globale, pour contrôler les données d'intégrité et de performances de chacun des différents systèmes satellites de navigation globale et pour générer une correction différentielle ; et
un émetteur-récepteur de communications pour transmettre les données d'intégrité et de performances et la correction différentielle au centre opérationnel.

5. Système selon la revendication 4, dans lequel la station de référence est conçue pour fonctionner sélectivement dans un parmi plusieurs modes comprenant un mode d'auto-suivi et un mode d'auto-étalonnage, un mode de suivi en collaboration avec une station de référence / centre opérationnel (RS/OC) et d'étalonnage, et un mode de fonctionnement normal.

6. Système selon la revendication 5, dans lequel la station de référence fonctionnant en mode d'auto-suivi et auto-étalonnage est conçue pour :
effectuer un contrôle autonome d'intégrité du récepteur ;
confirmer l'intégrité des données de navigation en fonction d'un emplacement de la station de référence connu et stationnaire ;
déterminer un emplacement de la station de référence en utilisant des données de navigation collectées sur une période de temps prédéterminée ; et
déterminer une précision attendue de plusieurs signaux de navigation reçus,
l'emplacement de la station de référence et la précision attendue des signaux de navigation reçus étant actualisés en continu en mode d'auto-suivi et d'auto-étalonnage afin de permettre de passer en mode de fonctionnement normal.

7. Système selon la revendication 5, dans lequel la station de référence fonctionnant en mode de suivi en collaboration avec une station de référence / centre opérationnel (RS/OC) et d'étalonnage est conçu pour fournir une pseudo-gamme et des données de mesure de phase porteuse des systèmes satellites de navigation globale au centre opérationnel, le centre opérationnel utilisant une pseudo-gamme et des données de mesure de phase porteuse d'une autre station de référence qui a été précédemment suivie et la pseudo-gamme et les données de mesure de phase porteuse de la station de référence en fonctionnement dans le mode de suivi en collaboration avec une station de référence / centre opérationnel (RS/OC) pour déterminer un emplacement de la station de référence.

8. Système selon la revendication 5, dans lequel la station de référence fonctionnant en mode normal est conçu pour effectuer un contrôle d'intégrité en continu du système satellite de navigation globale utilisé, le contrôle d'intégrité en continu comprenant :
la prédiction d'une pseudo-gamme du système satellite de navigation globale utilisé, où la pseudo-gamme est prédite en utilisant des données de navigation en provenance du système satellite de navigation globale utilisé, une position connue de la station de référence et des estimations horaires en provenance d'un autre système satellite de navigation globale ;
la comparaison de la pseudo-gamme prédite à une pseudo-gamme mesurée du système satellite de navigation globale utilisé pour déterminer toute différence ; et
la détermination qu'il y a un problème d'intégrité en réponse à la différence dépassant une valeur seuil prédéterminée.

9. Système selon la revendication 1, dans lequel le centre opérationnel comprend :
un module destiné à aider des stations de référence dans un suivi en collaboration avec une station de référence / centre opérationnel (RS/OC) et un étalonnage de chaque station de référence, où le centre opérationnel :
reçoit des données de navigation depuis une station de référence nouvellement déployée ;
combine les données de navigation depuis la station de référence nouvellement déployée avec des données de navigation mesurées depuis une station de référence précédemment suivie et étalonnée en utilisant une technique différentielle, la technique différentielle comprenant l'utilisation d'une mesure de pseudo-gamme doublement différentiée et d'une mesure de phase porteuse doublement différentiée ; et
où le centre opérationnel comprend en outre une base de données incluant une identification de chaque station de référence, un emplacement de chaque station de référence, un statut d'étalonnage et une précision de chaque station de référence, un paramètre de correction différentielle pour chaque station de référence, et des informations liées à chaque système satellite de navigation globale.

10. Procédé d'augmentation et d'assistance pour GNSS multi-constellation, comprenant :
le contrôle de données d'intégrité et de performances en provenance d'un système satellite de navigation globale par plusieurs stations de référence ;
la transmission des données d'intégrité et de performances depuis chaque station de référence à un centre opérationnel ;
l'intégration et l'analyse des données d'intégrité et de performances de chaque station de référence par le centre opérationnel ;
la génération d'un message en fonction de l'analyse des données d'intégrité et de performances, le message comprenant des informations utilisables pour augmentation et assistance par un équipement navcom d'un utilisateur pour fournir des informations de position et navigation globales à l'utilisateur en utilisant des données de navigation reçues par l'équipement navcom en provenance du système satellite de navigation globale ; et
l'envoi du message à un équipement navcom de l'utilisateur.

11. Procédé selon la revendication 10, comprenant en outre l'utilisation de données de navigation d'un autre système satellite de navigation globale par l'équipement navcom de l'utilisateur, l'autre système satellite de navigation globale étant utilisé par l'équipement navcom dans des conditions prédéterminées.

12. Procédé selon la revendication 10, comprenant en outre :
la génération d'une correction différentielle locale par chaque station de référence en utilisant les données de navigation reçues par la station de référence et un emplacement géographique connu de la station de référence ; et
la détermination de l'intégrité des données de la navigation reçues depuis le système satellite de navigation globale par chaque station de référence.

13. Procédé selon la revendication 12, dans lequel la détermination de l'intégrité des données de la navigation par chaque station de référence comprend :
la réception des données de navigation depuis le système satellite de navigation globale ;
la détermination d'estimations horaires en provenance d'un autre système satellite de navigation globale ;
la prédiction d'une pseudo-gamme du système satellite de navigation globale en utilisant les données de navigation reçues du système satellite de navigation globale et les estimations horaires et un emplacement connu de la station de référence ;
la mesure d'une pseudo-gamme du système satellite de navigation globale ;
la comparaison de la pseudo-gamme prévue à la pseudo-gamme mesurée du système satellite de navigation globale pour déterminer toute différence ;
la présentation d'une indication d'échec de vérification d'intégrité en réponse à une différence supérieure à une valeur seuil prédéterminée ; et
la présentation d'une indication de réussite de vérification d'intégrité en réponse à une différence inférieure ou égale à la valeur seuil prédéterminée.

14. Procédé selon la revendication 10, comprenant en outre :
le suivi et l'étalonnage de chacune des stations de référence, où le suivi et l'étalonnage de chaque station de référence comprend :
la transmission des mesures de pseudo-gamme et de phase porteuse pour le système satellite de navigation globale au centre opérationnel par une station de référence nouvellement déployée ; la mesure de mesures de pseudo-gammes et de phase porteuse à partir d'une station de référence suivie et étalonnée proche de la station de référence nouvellement déployée pour déterminer un emplacement géographique de la station de référence nouvellement déployée ; et
la combinaison de mesures en provenance de la station de référence nouvellement déployée avec les mesures de la station de référence précédemment suivie et étalonnée pour déterminer un emplacement précis de la station de référence nouvellement déployée et pour suivre et étalonner la station de référence nouvellement déployée.

15. Procédé selon la revendication 14, comprenant en outre d'utiliser une technique différentielle pour combiner les mesures de la station de référence nouvellement déployée et les mesures de la station de référence précédemment suivie et déployée, où utiliser la technique différentielle comprend d'utiliser une mesure de pseudo-gamme doublement différentiée et une mesure de phase porteuse doublement différentiée.
